Europäisches Patentamt

European Patent Office

Office européen des brevets

(19)

(11) Numéro de publication: **0 061 221**

**B1**

(12) # FASCICULE DE BREVET EUROPEEN

(45) Date de publication du fascicule du brevet: **19.06.85**

(51) Int. Cl.⁴: **G 11 B 3/08**, G 11 B 3/20

(21) Numéro de dépôt: **82200294.5**

(22) Date de dépôt: **08.03.82**

(54) **Tourne-disque à retour de bras réalisé par ressort.**

(30) Priorité: **20.03.81 FR 8105630**

(43) Date de publication de la demande:
**29.09.82 Bulletin 82/39**

(45) Mention de la délivrance du brevet:
**19.06.85 Bulletin 85/25**

(84) Etats contractants désignés:
**DE FR GB IT**

(56) Documents cités:
**DE-A-1 572 418**
**DE-A-2 337 430**
**FR-A-1 559 762**
**GB-A- 948 758**
**US-A-3 129 007**

(73) Titulaire: **S.A. PHILIPS INDUSTRIELLE ET COMMERCIALE**
**50 Avenue Montaigne**
**F-75380 Paris Cedex 08 (FR)**
(84) **FR**

(73) Titulaire: **N.V. Philips' Gloeilampenfabrieken**
**Groenewoudseweg 1**
**NL-5621 BA Eindhoven (NL)**
(84) **DE GB IT**

(72) Inventeur: **Beugin, Michel SOCIETE CIVILE S.P.I.D.**
**209, rue de l'Université**
**F-75007 Paris (FR)**
Inventeur: **Marriere, Jean-Pierre SOCIETE CIVILE S.P.I.D.**
**209, rue de l'Université**
**F-75007 Paris (FR)**

(74) Mandataire: **Charpail, François et al**
**Société Civile S.P.I.D. 209, rue de l'Université**
**F-75007 Paris (FR)**

Courier Press, Leamington Spa, England.

**Description**

L'invention concerne un tourne-disque à bras de lecture articulé autour d'un axe vertical et d'un axe horizontal, susceptible d'être transporté par pivotement horizontal d'une position de repos vers le disque et d'être abaissé sur le sillon du disque ou relevé par déplacement vertical d'un support de bras, lui-même entraîné par le mouvement d'une came, le relèvement et le retour du bras à sa position de repos étant réalisés par la détente d'un ressort antérieurement tendu lors de son abaissement sur le disque. Un tel tourne-disque est connu de la demande de brevet allemend n° 1 572 418. Dans ce tourne-disque, l'utilisateur manoeuvre une barre d'armement qui tend le ressort de retour et sur laquelle est appuyé un plateau comportant, d'une part, la came d'abaissement/relèvement du bras, et d'autre part, une paire de bielles commandant les déplacements horizontaux du bras. Ce dispositif présente l'inconvénient de lier deux manoeuvres; relèvement et retour du bras, alors que l'utilisateur pourrait souhaiter les effectuer séparément. En effet, il est utile de pouvoir relever le bras de lecture en le laissant au-dessus du disque, soit pour reprendre la lecture ultérieurement, soit pour déplacer manuellement le point de lecture. Or, le mécanisme de la demande de brevet allemand n° 1 572 418 ne permet à l'utilisateur que d'agir sur la barre d'armement et le bras relevé ne peut ainsi occuper que la position de repos, à moins de débrayer totalement le mécanisme (manoeuvres manuelles du bras).

Le brevet allemand DE 2 337 430 prévoit, pour le relèvement du bras d'un tourne-disque, la juxtaposition d'une commande manuelle à la commande automatique concomitante de celle du retour de bras. En ce sens, ce document obtient comme résultat la séparation possible des deux mouvements. Mais la commande manuelle de relèvement n'agit pas sur l'armement d'un système de retour, par exemple à ressort.

Afin, notamment, de séparer les deux mouvement de relèvement et de retour du bras, le tourne-disque conforme à l'invention se caractérise par le fait que la came entraînant le support de bras est également susceptible de pousser, lors de l'abiassement du bras, un levier basculant muni d'un doigt et auquel est attaché le ressort de retour de bras, la trajectoire d'armement dudit levier ainsi poussé plaçant après basculement le doigt derrière une patte d'un étrier solidiare du bras en rotation autour de son axe vertical, le levier basculant comportant en outre un plot de verrouillage qui coopère avec un verrou d'une barre de commande. Il y a donc, par rapport au brevet allemand 1 572 418 une inversion de l'ordre d'action des organes de commande: c'est le dispositif d'abaissement/relèvement qui arme, en le poussant, l'élément auquel est attaché le ressort et non l'inverse. Ainsi, lorsque le levier basculant est armé, il est possible de relever et abaisser à nouveau le bras sans déclencher son retour, la came ne poussant plus le levier basculant déjà en place. L'invention s'applique, notamment, aux tourne-disques dits "semi-automatiques" dans lesquels la mise en place du bras au-dessus du disque est manuelle. Par exemple, l'effacement du verrou peut être produit par une commande indépendante à la disposition de l'utilisateur ou par un palpeur de fin de lecture du disque sensible à la vitesse radiale de déplacement du bras sur le disque.

Afin de permettre au levier de s'insérer derrière l'étrier et la verrou, il est préférable de lui faire contourner ces obstacles. Pour cela, la trajectoire du levier basculant est définie, d'une part, par déplacement de son pivot de basculement et, d'autre part, par un plot dudit levier contraint de suivre un chemin de guidage dermé. En particulier, sur deux positions extrêmes de la trajectoire du levier basculant, l'état armé du levier, avant retour du bras, et son état repos après retour du bras sont obtenus par brusque basculement du levier autour de l'alignement du point d'attache fixe de ressort de retour, du point d'attache dudit resort sur le levier basculant et du pivot de basculement dudit levier. Notamment, une telle disposition assure que le levier d'armement décrit sa trajectoire toujours dans le même sens, une branche étant parcourue lorsque le levier est poussé par la came, l'autre branche étant parcourue lorsque le ressort rappelle le levier vers la position de repos.

Dans un mode de réalisation particulier, la came entraînant les déplacements verticaux du support de bras est constituée d'un secteur circulaire comportant une piste à dénivelée verticale et articulé autour de l'axe vertical de rotation du bras, lors de l'abaissement du bras, ledit secteur étant susceptible de pousser en rotation coaxiale une bielle portant le pivot de basculement du levier, et lors des relèvement et retour du bras, inversement, ledit levier basculant, rappelé par le ressort de retour, étant susceptible d'entraîner ladite bielle à pousser le secteur circulaire. Ainsi, la came et la bielle agissent réciproquement par poussée l'une sur l'autre sans devoir être liées l'une à l'autre. Il est souhaitable de ralentir le mouvement de retour du bras que le ressort aurait tendance à ramener trop brutalement à sa position de repos: par exemple, la rotation de ladite bielle est ralentie lors des relèvement et retour du bras par un frein à effet unidirectionnel.

La description qui suit et les dessins illustrent un exemple de réalisation d'un tourne-disque conforme à l'invention.

La figure 1 est une vue en perspective éclatée des éléments d'un tourne-disque conforme à l'invention.

Les figures 2 et 3 montrent les déplacements du levier basculant du tourne-disque selon la figure 1.

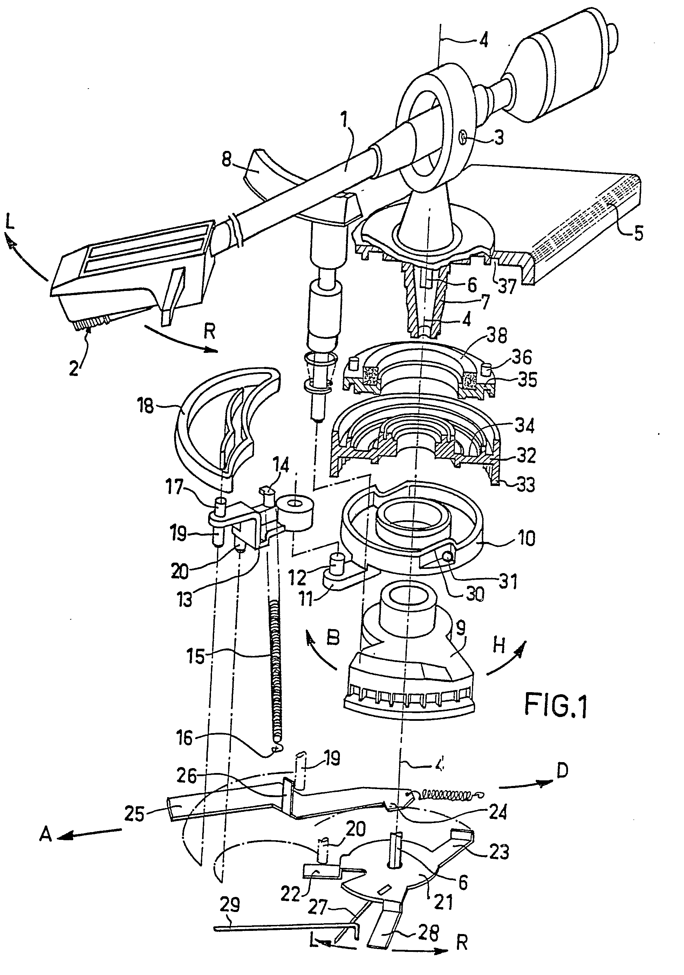

Sur la figure 1 ont été représentés les mécanismes commandant les mouvements horizontaux et verticaux du bras de lecture 1 d'un tourne-disque conforme à l'invention. Ce bras de lecture porte à son extrémité la tête de lecture équipée d'une pointe 2 destinée à être posée dans le sillon d'un disque phonographique situé sur la plateau du tourne-disque (non représentés).

Le tourne-disque illustré est d'un type semi-automatique sur lequel l'utilisateur place manuellement la pointe de lecture au-dessus du disque et abaisse ensuite le bras. Le relèvement du bras et son retour en position de repos sont automatiques. Le bras 1 est articulé autour d'un axe horizontal 3 pour ses mouvements verticaux, et autour d'un axe vertical 4, pour ses mouvements horizontaux. Le bras 1, ainsi que le plateau non représenté du tourne-disque sont montés sur une platine 5 sensiblement horizontale traversée par un arbre vertical 6 solidaire du bras 1 en rotation autour de l'axe 4. L'arbre 6 se prolonge sous la platine 5 à travers une colonne creuse 7 autour de laquelle sont montés divers organes décrits ci-dessous. De la platine 5 fait également saillie un support de bras 8 constitué d'une branche horizontale sur laquelle peut reposer et glisser le bras 1, et d'un pied traversant la platine et manoeuvrable verticalement pour l'abaissement et le relèvement du support 8 et donc du bras 1. Par rotation horizontale dans le sens de la flèche L, le bras est amené vers sa position de lecture, au-dessus du disque. Par rotation horizontale dans le sens de la flèche R, le bras est ramené vers sa position de repos, qui est matérialisée sur le support 8 par une légère butée en saillie. Le pied du support a éventuellement ses mouvements verticaux amortis pour permettre une arrivée ralentie de la pointe de lecture dans le sillon du disque. La manoeuvre verticale du support 8 est obtenue du fait que son pied prend appui sur la piste à dénivelée verticale d'une came 9 constituée d'un secteur de cercle susceptible de tourner autour de l'axe vertical 4. A cet effet, le secteur de cercle est muni de dents dans lesquelles vient engrener un pignon (non représenté) lié à un levier de commande accessible à l'utilisateur du tourne-disque. Par rotation de la came 9 dans le sens de la flèche H, le support est relevé en position haute, par rotation de la came dans le sens de la flèche B, le support est abaissé et se sépare du bras 1 lorsque la pointe de lecture est posée dans le sillon du disque.

Les éléments permettant le relèvement et le retour automatique du bras de lecture 1 dont décrits ci-après. Un flasque 10 est centré au-dessus de la came 9, plus précisément peut tourner librement autour du moyeu de cette came. Le flasque 10 porte une bielle 11 sensiblement horizontale faisant saillie à sa partie inférieure pour pouvoir coopérer latéralement avec le bord de la came en forme de secteur circulaire 9. La bielle 11 porte un pivot vertical 12, tourné vers le haut, sur lequel est monté à rotation un levier basculant 13 servant à l'armement du dispositif automatique de retour du bras de lecture. En un point 14 du levier basculant 13 est attachée une extrémité d'un ressort spiral 15 de retour du bras. L'autre extrémité du ressort 15 est ancrée sur un point fixe 16, par exemple sous la platine 5. Le levier basculant 13 porte également un plot de guidage 17 vertical, tourné vers le haut, destiné à évoluer dans un chemin de guidage 18 fixe façonné, en forme de croissant par exemple, sous la platine 5. Le levier basculant 13 porte aussi un plot de verrouillage 19 vertical et dirigé vers le bas, aligné avec le plot de guidage 17 dans l'exemple illustré. Enfin, le levier basculant 13 porte un doigt 20 destiné à pousser le bras de lecture vers sa position de repos.

L'arbre 6 solidaire en rotation du bras 1 est lié à un étrier 21 portant une première patte 22 susceptible d'être poussée dans le sens de la flèche R par le doigt 20 du levier basculant 13. L'étrier 21 est muni d'une deuxième patte 23 destinée à s'engager, lorsque l'étrier tourne dans le sens L, contre un bec 24 d'une barre de commande 25, pour tirer ladite barre en translation dans le sens de la flèche D. Cette barre 25 est connectée à son extrémité non représentée à un commutateur électrique placé en série avec l'alimentation du moteur électrique du tourne-disque. La barre 25 tirée dans le sens D ferme le contact de ce commutateur, le moteur est alimenté, le plateau du tourne-disque démarre sa rotation. La barre 25 porte également un ergot 26 formant verrou, constitué par exemple d'une languette de métal rabattue vers le haut par rapport à la barre. Lorsque la barre 25 a été tirée dans le sens D (démarrage du tourne-disque), ce verrou 26 occupe une position propre à entraver l'évolution du plot de verrouillage 19 appartenant au levier basculant 13, donc propre à immobiliser ledit levier. La barre 25 est actionnée en retour dans le sens de la flèche A pour l'arrêt du tourne-disque. D'une façon très classique, c'est un dispositif à rochet à dent effaçable et palpeur d'arrêt (non représentés) qui déplace la barre dans le sens A. Ce palpeur est progressivement poussé par une barre de palpage 29, elle-même poussée par une troisième patte 28 de l'étrier 21 lié au bras de lecture. Lors de la lecture des spires gravées du disque, le bras 1 et l'étrier 21 tournent très lentement dans le sens L et poussent très lentement la barre de palpage 29, ce mouvement étant trop lent pour déclencher le dispositif à rochet. A la fin du disque, le pas des spires non gravées augmente considérablement, la vitesse de pivotement du bras 1 et de l'étrier 21 augmente aussi et la barre de palpage 29 déclenche le dispositif à rochet qui tire la barre de commande 25 dans le sens A pour l'arrêt du tourne-disque. L'étrier 21 porte une lame souple 27 dont le rôle est de positionner la barre de palpage 29 en début de lecture du disque.

En vue de ralentir la rotation du flasque 10 dans le sens H, sous la traction du ressort de retour de bras 15 agissant sur le levier 13, ce flasque 10 est relié à la platine 5 par un frein unidirectionnel dont un exemple est décrit ci-après. Le flasque 10 porte à sa périphérie deux encoches 30 contenant une bille 31. Il est coiffé par un plateau 32 susceptible de tourner librement tout en reposant sur le flasque 10. Une jupe inférieure 33 dudit plateau 32 est cannelée intérieurement, face aux billes 31. La forme en coin des encoches 30 permet, d'une part, le coincement des billes 31 contre les cannelures de la jupe 33, lorsque le flasque 10 est poussé dans le sens H, plateau 32 et flasque 10 étant alors solidaires en rotation, d'autre part, l'effacement des billes 31 lorsque ce flasque 10 est poussé dans le sens B, le plateau 32 n'étant alors pas entraîné dans ce sens B. Le plateau 32 porte à sa surface horizontale supérieure une rigole circulaire 34 contenant une graisse aux silicones. Contre cette rigole 34 presse un anneau 35, retenu en rotation par des ergots 36 engagés dans des alésages 37 de la platine et pressé élastiquement vers le bas, par exemple par une bague de mousse élastique 38 prenant appui sous la platine 5. Lorsque le flasque 10 est déplacé dans le sens H par le levier basculant 13 et la bielle 11, il entraîne, via les billes 31, le plateau 32. La friction de ce plateau contre l'anneau 35, par graisse interposée, provoque un freinage du mouvement. Pour éviter que la graisse se répande dans le mécanisme, le plateau 32 et l'anneau 35 ont un ensemble de nervures et de gorges périphériques conjuguées formant chicanes.

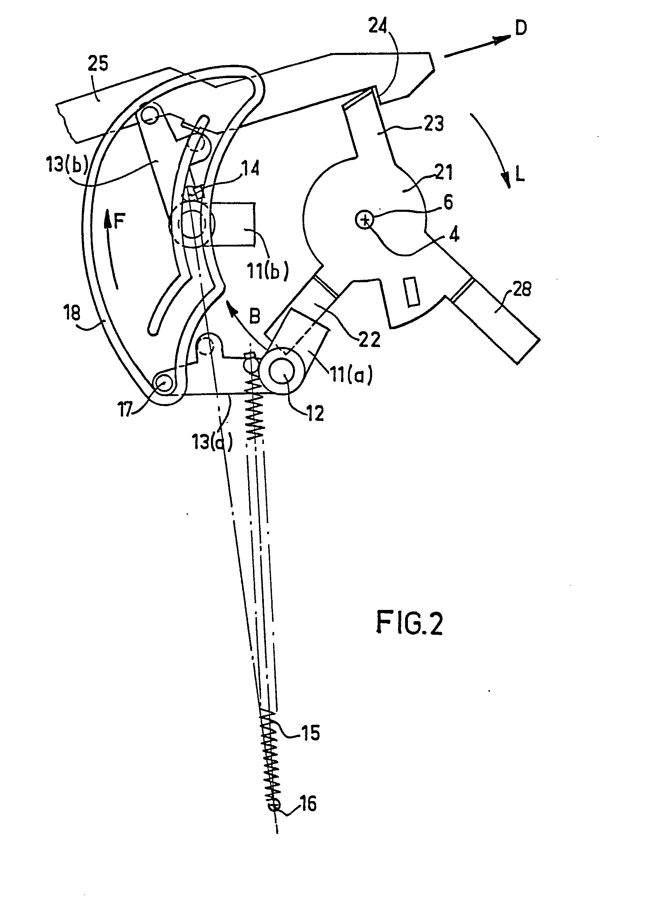

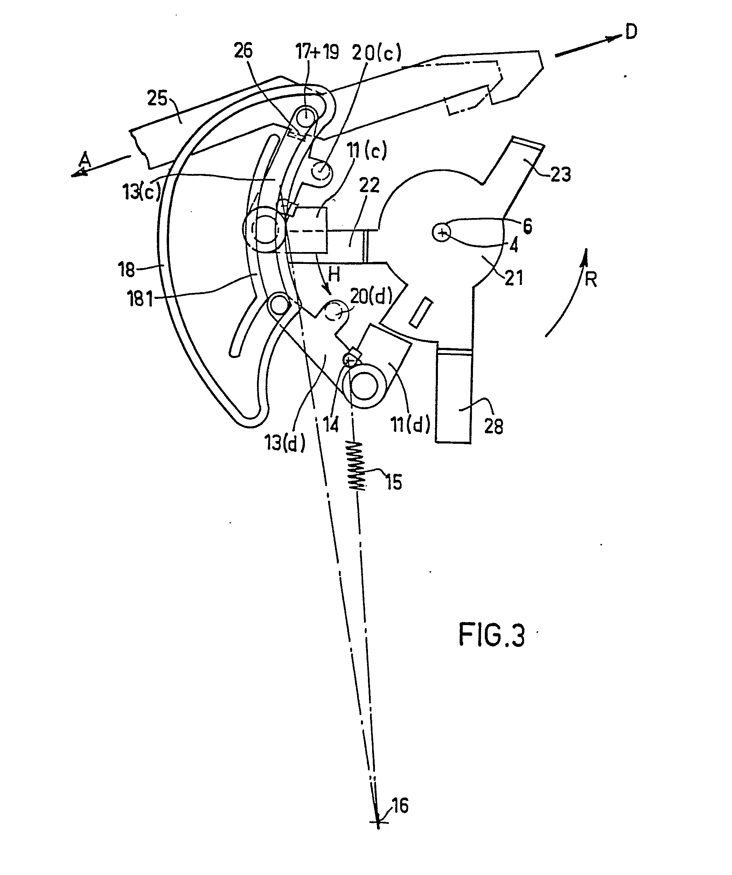

La mise en oeuvre des mécanismes décrits ci-dessus est maintenant explicitée, également en regard des figures 2 et 3 qui représentent, vue de dessus, les positions successives de divers éléments de ces mécanismes.

La situation de départ est celle dans laquelle le bras de lecture est en position haute, posé sur son support 8, à l'extrémité droite (fig. 1), en position de repos. L'étrier 21 occupe la position montrée sur la figure 2. L'utilisateur fait glisser le bras de lecture sur son support vers le disque, en vue de sa lecture (sens L). L'arbre 6 simultanément fait tourner l'étrier 21 dans le même sens L. A cette occasion, le bras 23 de l'étrier déplace la barre de commande 25 dans le sens D, par poussée sur le bec 24, en vue du démarrage du moteur du tourne-disque. La came 9 occupe encore la position pour laquelle le support 8 est levé. La bielle 11 occupe la position 11 (a) montrée figure 2. Le levier basculant occupe la position 13 (a) dans laquelle il est maintenu par la traction du ressort 15. C'est le plot 17, engagé dans le chemin de guidage 18 fixe, qui définit avec le pivot 12 cette position 13 (a) de "repos", à l'une des extrémités du chemin de guidage en forme de croissant.

Le bras de lecture 1 est alors abaissé sur le disque. Pour cela, l'utilisateur manoeuvre la came 9 dans le sens B. Le support de bras 8 dont le pied repose sur la came est descendu et se sépare du bras lorsque la pointe de lecture a atteint le disque. Dans son mouvement (sens B), la came 9 pousse la bielle 11 sur laquelle est articulé le levier 13. Le plot 17 de ce levier suit le chemin de guidage dans le sens de la flèche F. La différence de courbure de la trajectoire circulaire du pivot 12 et du chemin de guidage 18 oblige le levier à pivoter dans le sens horaire par rapport à la bielle. Lorsque la bielle atteint la position 11 (b), les points d'attache 14 et 16 du ressort 15 deviennent alignés avec l'axe du pivot 12 du levier, qui est dans la position 13 (b). Lorsque la bielle est poussée (sens B) au-delà de cette position 11 (b), le levier 13 bascule brusquement sous la traction du ressort 15, le chemin de guidage lui autorisant alors une libre excursion de quelques 25° dans le sens horaire. Après basculement, le levier est dans la position 13 (c) montrée figure 3. Le basculement a eu pour conséquence de faire passer le plot 19 (situé sous le plot 17) derrière le verrou 26 de la barre de commande 25 préalablement placé dans la position de verrouillage lors du mouvement de cette barre (sens D) au démarrage du tourne-disque.

A cette extrémité de sa trajectoire, le levier 13 est donc immobilisé en position "armé", le ressort 15 tendu. La pointe de lecture est posée sur le disque. Elle peut être relevée et abaissée de nouveau par manoeuvre dans les sens H et B de la came 9. Cela n'affecte pas le verrouillage du levier basculant 13.

Automatiquement en fin de disque, ou par déplacement manuel du bras de lecture vers le centre du disque, l'étrier 21 (fig. 1) pousse la barre de palpage 29 qui déclenche le dispositif d'arrêt du tourne-disque et, notamment, tire la barre de commande 25 dans le sens A. Le verrou 26 est effacé devant le plot 19 du levier basculant 13. Le ressort 15 tire le levier 13 et la bielle 11 de la position 13 (c), 11 (c) à la position 13 (d), 11 (d) montrées figure 3. Dans sa rotation dans le sens H, la bielle 11 pousse immédiatement la came 9, ce qui relève le bras le lecture s'il était dans la position basse. Puis le doigt 20 du levier pousse la patte 22 de l'étrier 21 dans le sens R, c'est-à-dire ramène le bras dans sa position de repos. Au cours de ce trajet 11 (c), 11 (d), l'axe du pivot 12 passe à nouveau dans l'alignement des points d'attache 14 et 16 du ressort. Le basculement du levier 13 est toutefois retardé par une seconde paroi 181 du chemin de guidage 18, afin que le doigt 20 accompagne la patte 22 de l'étrier jusqu'à la position "repos" du bras de lecture (situation 20 (d) du doigt). Le levier basculant est ensuite libre de pivoter dans le sens antihoraire pour rejoindre sa position 13 (a) de la figure 2. Pendant la rotation de 11 (c) à 11 (d), la bielle 11 et son flasque 10 entraînent, via les billes 31, le plateau 32 dont le mouvement est freiné. Le retour du bras est ainsi freiné.

La forme et la fonction du chemin de guidage 18 sont précisées ci-après, à la lumière des explications précédentes. Ce chemin 18 doit guider une extrémité (plot 17) du levier basculant 13 dont l'autre extrémité est articulée sur le pivot 12 lui-même tournant autour de l'axe 4. Le chemin de guidage a près approximativement la forme d'un croissant dont la concavité est dirigé vers l'arbre 6. Les branches "armement" et "retour" sont des arcs de cercles centrés sur l'axe 4. Entre ces deux branches, le levier 13 bascule autour de l'alignement de son pivot avec le ressort 15. Les deux branches sont réunies par deux portions de cercle de concavité permettant le libre basculement du levier, et de rayon sensiblement égal à la longueur du levier 13. Les deux basculements permettent, d'une part, lors de l'armement, de faire passer le plot 19 du levier derrière le verrou 26 et le doigt 20 derrière la patte 22 de l'étrier 21, d'autre part, après le retour du bras, d'éloigner le doigt 20 de la patte 22. Après ces basculements, le levier occupe une position stable: "armé" ou "repos". L'énergie nécessaire à l'armement est prélevée sur le dispositif d'abaissement du bras (came 9), cette énergie est stockée dans le ressort 15 qui la restitue pour le retour du bras de lecture.

## Revendications

1. Tourne-disque à bras (1) de lecture articulé autour d'un axe vertical (4) et d'un axe horizontal (3), susceptible d'être transporté par pivotement horizontal d'une position de repos vers le disque et d'être abaissé sur le sillon du disque ou relevé par déplacement vertical d'un support (8) de bras, lui-même entraîné par le mouvement d'une came (9), le relèvement et le retour du bras (1) à sa position de repos étant réalisés par la détente d'un ressort (15) antérieurement tendu lors de son abaissement sur le disque, caractérisé par le fait que la came (9) entraînant le support (8) de bras est également susceptible de pousser, lors de l'abaissement du bras, un levier (13) basculant muni d'un doigt (20) et auquel est attaché le ressort de retour de bras, la trajectoire d'armement dudit levier ainsi poussé plaçant après basculement le doigt (20) derrière une patte (22) d'un étrier (21) solidaire du bras en rotation autour de son axe vertical, le levier (13) basculant comportant en outre un plot de verrouillage (19) qui coopère avec un verrou (26) d'une barre de commande (25).

2. Tourne-disque selon la revendication 1, caractérisé par le fait que la trajectoire du levier (13) basculant est définie, d'une part, par déplacement de son pivot (12) de basculement et, d'autre part, par un plot (19) dudit levier contraint de suivre un chemin de guidage (18) fermé.

3. Tourne-disque selon l'une quelconque des revendications 1 à 2, caractérisé par le fait que sur deux positions extrêmes de la trajectoire du levier (13) basculant, l'état armé du levier (13), avant retour du bras (1), et son état repos, après retour du bras (1), sont obtenus par brusque basculement du levier autour de l'alignement du point d'attache (16) fixe du ressort (15) de retour, du point d'attache (14) dudit ressort sur le levier (13) basculant et du pivot (12) de basculement dudit levier (13).

4. Tourne-disque selon l'une quelconque des revendications 1 à 3, caractérisé par le fait que la came (9) entraînant les déplacements verticaux du support (8) de bras (1) est constituée d'un secteur circulaire comportant une piste à dénivelée verticale et articulé autour de l'axe vertical (4) de rotation du bras (1), lors de l'abaissement du bras, ledit secteur étant susceptible de pousser en rotation coaxiale une bielle (11) portant le pivot (12) de basculement du levier (13), et lors des relèvement et retour du bras (1), inversement, ledit levier (13) basculant, rappelé par le ressort (15) de retour, étant susceptible d'entraîner ladite bielle (11) à pousser le secteur circulaire.

5. Tourne-disque selon la revendication 4, caractérisé par le fait que la rotation de ladite bielle (11) est ralentie lors des relèvement et retour du bras par un frein à effet unidirectionnel.

## Patentansprüche

1. Plattenspieler mit einem Tonarm (1), der um eine vertikale Achse (4) und eine horizontale Achse (3) schwenkbar ist, wobei der Arm aus einer Ruhelage zu der Platte durch eine horizontale Schwenkbewegung beweglich ist und durch eine vertikale Bewegung eines Armträgers (8) zu der Platte abgesenkt oder von der Platte abgehoben werden kann, wobei der Armträger seinerseits durch einen Nocken (9) bewegt wird, wobei der Arm (1) durch in einer Feder (15) gespeicherte Energie gehoben und in die Ruhelage zurückgeführt wird, wobei die Feder gestrafft wird, wenn der Arm zu der Platte hin abgesenkt wird, dadurch gekennzeichnet, dass beim Absenken des Arms der Nocken (9), der den Armträger (8) bewegt, ebenfalls einen Kipphebel (13) mit einem Finger (20) betätigt, an dem die Armrückführungsfeder befestigt ist, wobei die resultierende Bewegung des genannten Hebels dafür sorgt, dass ein Teil des genannten Hebels hinter einen Finger (20) auf einem Element gebracht wird, das zum Drehen mit demselben um die genannte vertikale Achse damit gekoppelt ist, wobei der Kipphebel (13) ausserdem einen Verriegelungsstift (19) aufweist, der mit einer Riegel (26) einer Steuerstange (25) zusammenarbeitet.

2. Plattespieler nach Anspruch 1, dadurch gekennzeichnet, dass die strecke das Kniehebels (13) durch die Verschiebung des Swenckpunktes (12) und durch einen Stift (19) auf dem genannten Hebel definiert wird, wobei der Stift gezwungen wird, einer geschlossenen Führungsstrecke (18) zu folgen.

3. Plattenspieler nach einem der Ansprüche 1 und 2, dadurch gekennzeichnet, dass in den zwei Endpositionen der Strecke des Kniehebels (13) der belastete Zustand des Hebels (13) vor der Rückkehr der Arms (1), und dessen Ruhelage, nach der Rückkehr des Arms (1) durch eine plötzlich auftretende Swenkbewegung des Hebels um eine gerade Linie erhalten werden, auf welcher der feste Punkt (16) der Befestigung der Rückkehrfeder (15), der Befestigungspunkt (14) der genannten Feder an dem Kniehebel (13) und die Swenkachse (12) des gannanten Hebels (13) vorgesehen sind.

4. Plattenspieler nach einem der Ansprüche 1 bis 3, dadurch gekennzeichnet, dass der Nocken (9), der die vertikalen Bewegungen des Trägers (8) des Arms (1) herbeiführ, einen Körper aufwist, der im wesentlichen die Form eines Kreissektors hat und eine aufwärts gekrümmte Nockenspur auf dem Körper und Swenkpunkte um die vertikale Swenkachse (4) der Arms (1), wobei der Nockenkörper während der Absenkbewegung des Arms eine koaxiale Drehung eines Fingers (1) herbeiführt, der den Swenkpunkt (12) des Hebels (13) aufweist und andererseits beim Anheben und Zurückkehren des Arms der Hebel (13) unter dem Einfluss der Rückkehrfeder (15) den Finger (11) betätigt um deisen gegen den Nockenkörper zu drücken.

5. Plattenspieler nach Anspruch 4, dadurch gekennzeichnet, dass während der Anhebe- und Rückkehrbewegungen des Arms die Drehung des Fingers (11) durch eine Einrichtungsbremse abgebremst wird.

**Claims**

1. A record player having a pick-up arm (1) which is pivotable about a vertical axis (4) and a horizontal axis (3), which arm can be moved from a rest position towards the record by a horizontal pivotal movement and can be lowered onto the record or lifted by vertical movement of an arm support (8) which in turn is moved by means of a cam (9), the arm (1) being lifted and returned to its rest position by the relaxation of a spring (15) which is tensioned previously when said arm is lowered onto the record, characterized in that during lowering of the arm the cam (9) which moves the arm support (8) also actuates a toggle lever (13) which comprises a finger (20) and to which the arm-return spring is attached, the resulting over-centre movement of said lever causing the finger (20) to be positioned behind a finger (22) on a member (21) which is coupled to the arm for rotation therewith about its vertical axis, said lever (13) also comprising a latching pin (19) which cooperates with a finger (26) on a control bar (25).

2. A record player as claimed in Claim 1, characterized in that the path of the toggle lever (13) is defined by the displacement of its pivot (12) and by a pin (18) on said lever which is force to follow a closed guide path (18).

3. A record player as claimed in any one of Claims 1 and 2, characterized in that in the two end positions of the path of the toggle lever (13), the loaded condition of the lever (13), before the return of the arm (1), and its rest condition, after the return of the arm (1), are obtained by a sudden pivotal movement of the lever about a straight line on which the fixed point of attachment (16) of the return spring (15), the point of attachment (14) of said spring to the toggle lever (13) and the pivot (12) of said lever (13) are disposed.

4. A record player as claimed in any one of Claims 1 to 3, characterized in that the cam (9) which produces the vertical movements of the arm (1) support (8) comprises a body having the shape of a sector of a circle, which body comprises an upwardly curved cam track and pivots about the vertical pivotal axis (4) of the arm (1), said cam body being capable of producing, during lowering of the arm, a coaxial rotation of a finger (11) carrying the pivot (12) of the lever (13), and, during lifting and returning of the arm (1), said lever (13), under the influence of the return spring (15) being capable of actuating said finger (11) so as to press it against the cam body.

5. A record player as claimed in Claim 4, characterized in that during the lifting and return movements of the arm the rotation of said finger (11) is braked by a unidirectional brake.

FIG.1

FIG.2

FIG.3